(19) Europäisches Patentamt
European Patent Office
Office européen des brevets

(11) **EP 1 426 740 B1**

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(51) Int Cl.:
**G01F 1/684** *(2006.01)* **G01N 27/18** *(2006.01)*
**G01N 27/12** *(2006.01)* **G01F 1/692** *(2006.01)*

(21) Anmeldenummer: **03022893.6**

(22) Anmeldetag: **09.10.2003**

(54) **Vorrichtung zur Messung des Flusses und mindestens eines Materialparameters eines Fluids**

Device for measuring the flow and at least one material parameter of a fluid

Dispositif pour la mesure de l' écoulement et d' au moins une paramètre materielle d' un fluide

(84) Benannte Vertragsstaaten:
**CH DE GB LI**

(30) Priorität: **27.11.2002 CH 200102**

(43) Veröffentlichungstag der Anmeldung:
**09.06.2004 Patentblatt 2004/24**

(73) Patentinhaber: **Sensirion Holding AG**
**8712 Stäfa (CH)**

(72) Erfinder:
• **Hornung, Mark**
**8049 Zürich (CH)**
• **Kubasch, Jens**
**8046 Zürich (CH)**
• **Lechner, Moritz**
**8057 Zürich (CH)**
• **Mayer, Felix**
**8057 Zürich (CH)**

(74) Vertreter: **Sutter, Kurt et al**
**E. Blum & Co. AG**
**Vorderberg 11**
**8044 Zürich (CH)**

(56) Entgegenhaltungen:
**EP-A- 0 484 645 EP-A- 1 094 306**
**WO-A-01/18500**

• **MAYER F. ET AL: "Scaling of thermal CMOS gas flow microsensors:experiment and simulation" MICRO ELECTRO MECHANICAL SYSTEMS, 1996,PROCEEDINGS.AN INVESTIGATION OF MICRO STRUCTURES,SENSORS,ACTUATORS, MACHINES AND SYSTEMS.IEEE,THE NINTH ANNUAL INTERNATIONAL WORKSHOP ON SAN DIEGO,CA,USA,11-15 FEB. 1996, 11. Februar 1996 (1996-02-11), Seiten 116-121, XP000689255 NEW YORK,NY,USA**

**Beschreibung**

Die Erfindung betrifft eine Vorrichtung zur Messung des Flusses und mindestens eines Materialparameters eines Fluids, ein Gerät zum Mischen von Fluiden und die Verwendung einer derartigen Vorrichtung gemäss Oberbegriff der unabhängigen Ansprüche.

WO 01/18500 beschreibt eine Vorrichtung, bei welcher die Wärmeleitfähigkeit und der Massenfluss eines Gases gemessen werden. Hierzu ist einerseits ein konventioneller thermischer Flusssensor mit einer Heizung und symmetrisch zur Heizung angeordneten Temperatursensoren vorgesehen, der im strömenden Gas liegt, und andererseits ein gleich aufgebauter Referenzsensor, der in einem nicht strömenden Teil des Gases liegt. Eine derartige Vorrichtung erlaubt eine genauere Bestimmung des Flusses, da mit dem Referenzsensor das Wärmeübergangsverhalten des Gases genauer bestimmt und für eine Korrektur des Flusswerts eingesetzt werden kann.

EP 484 645 beschreibt eine Vorrichtung zur Identifikation von Gasen und zur Messung des Flusses derselben. Das Gas wird dabei aufgrund seiner thermischen Eigenschaften aus einer Liste vorgegebener Gase identifiziert. Der Fluss wird thermisch gemessen.

US 5 515 714 beschreibt eine apparativ aufwändige Anordnung, welche zusätzlich ein zweites Paar von Temperatursensoren und eine zweite Heizung aufweist. Die daraus zusätzlich gewonnenen Signale erlauben eine Bestimmung des Mischungsverhältnisses des zu messenden Mediums.

Aufgabe der vorliegenden Erfindung ist eine Weiterentwicklung dieser Vorrichtung im Hinblick auf eine Vereinfachung des Aufbaus.

Diese Aufgabe wird von den unabhängigen Ansprüchen gelöst.

Insbesondere ist die Vorrichtung also so ausgestaltet, dass sie mindestens zwei Messgrössen t1, t2 ermittelt, die von Temperaturen in einem Einflussbereich der Heizung abhängen. Diese beiden Messgrössen sind so gewählt, dass sie unterschiedliche Funktionen $f_1(v, k)$ und $f_2(v, k)$ abhängig von Fluss m und von einem Materialparameter k sind. Beim Materialparameter k handelt es sich dabei um einen von der Wärmeleitfähigkeit des Fluids abhängigen Parameter. Die beiden unterschiedlichen Funktionen $f_1(m, k)$ und $f_2(m, k)$ bilden zusammen mit den Messgrössen t1 und t2 ein Gleichungssystem, das die Ermittlung des Flusses m und des Materialparameters k erlaubt. Das Fluid ist ein Gemisch aus mindestens zwei Stoffen und der Materialparameter k das Mischungsverhältnis derselben.

Die Messgrössen t1 und t2 werden dabei aus den Signalen der Temperatursensoren vor und nach der Heizung ermittelt. Weitere Temperatursensoren oder eine zusätzliche Heizung sind nicht unbedingt notwendig.

Dank dieser Ausgestaltung können alle Messungen bei derselben Heizung durchgeführt werden, wobei nur zwei Messgrössen ermittelt werden müssen. Denkbar ist allerdings auch die Ermittlung einer grösseren Zahl von Messgrössen, z.B. von mehr als zwei Temperaturwerten an unterschiedlichen Punkten in Nähe der Heizung, falls eine grössere Genauigkeit benötigt oder mehr als ein Materialparameter k ermittelt werden soll, z.B. die Wärmeleitfähigkeit und die Wärmekapazität.

Die erfindungsgemässe Vorrichtung wird verwendet, um die Zusammensetzung des Fluids zu messen. So kann die Vorrichtung in einem Gerät zur Mischung mindestens zweier Fluide unterschiedlicher Wärmeleitfähigkeit angeordnet werden. Der Parameter k ist das Mischungsverhältnis der Fluide und kann z.B. zur Regelung oder Überwachung des Verhältnisses eingesetzt werden.

Weitere bevorzugte Ausführungen und Anwendungsbeispiele ergeben sich aus den abhängigen Ansprüchen sowie aus der nun folgenden Beschreibung anhand der Figuren. Dabei zeigen:

Fig. 1 eine teilweise geschnittene Ansicht des Bereichs der Heizung und der zugehörigen Temperatursensoren einer bevorzugten Ausführung der Erfindung,
Fig. 2 eine Draufsicht auf einen Sensor gemäss Fig. 1,
Fig. 3 Beispielmessungen für Gasgemische mit unterschiedlichem Mischungsverhältnis (Achswerte in arbiträren Einheiten),
Fig. 4 ein Gerät zur Mischung zweier Fluide und
Fig. 5 ein Gerät zur Mischung dreier Fluide.

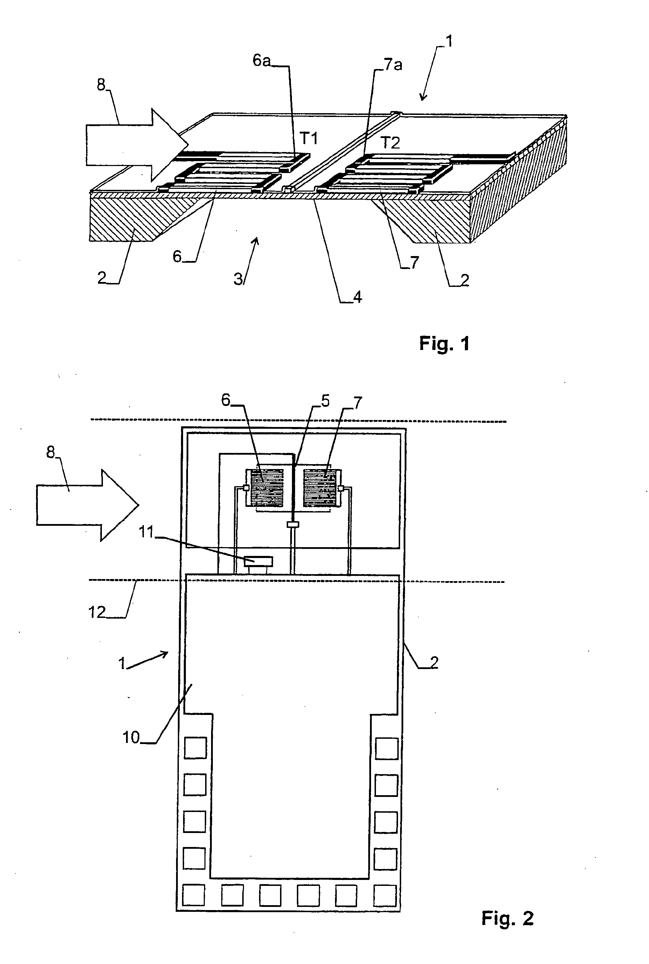

In einer bevorzugten Ausführung der Erfindung wird ein Sensor 1 verwendet, wie er in Fig. 1 und 2 dar-gestellt ist. Das Grundprinzip dieses Sensors ist WO 01/98736 beschrieben. Er kann, wie in WO 01/98736 beschrieben, verwendet werden, um die Flussgeschwindigkeit m, genauer gesagt den Massenfluss, eines Fluids, d.h. eines Gases oder einer Flüssigkeit, zu ermitteln.

Der Sensor ist auf einem Silizium-Einkristall 2 integriert, in welchem eine Öffnung oder Vertiefung 3 ausgeätzt wurde. Die Öffnung bzw. Vertiefung 3 wird von einer dünnen Membran 4 aus einem Dielektrikum überspannt. Auf der Membran 4 ist eine Widerstands-Heizung 5 angeordnet. Symmetrisch zur Heizung 5 sind als Temperatursensoren 6, 7 zwei Thermosäulen vorgesehen. Die Temperatursensoren 6, 7 und die Heizung 5 liegen so zur Flussrichtung 8, dass das zu messende Medium zuerst den ersten Temperatursensor 6, dann die Heizung 5 und schliesslich den zweiten Temperatursensor 7 überstreicht.

Die Heizung erzeugt einen Bereich nicht-homogener Temperaturverteilung im Fluid. Diese Temperaturverteilung ändert sich abhängig vom Fluss und von der Wärmeleitung des Fluids. Die beiden Temperatursensoren 6, 7 sind im Bereich der nicht-homogenen Temperaturverteilung angeordnet und können Änderungen registrieren.

Wie aus Fig. 2 ersichtlich, ist auf dem Einkristall 2 ferner eine Auswerteschaltung 10 integriert, sowie ein Fluid-Temperatursensor 11. Auf die Funktion der Auswerteschaltung 10 wird weiter unten eingegangen. Der Fluid-Temperatusensor 11 dient dazu, die Temperatur des Fluids und/oder des Einkristalls zu messen, z.B. um die Relativmessung der Thermosäulen in absolute Temperaturmessung umzuwandeln oder, wie weiter unten beschrieben, um Korrekturen in den Messresultaten durchzuführen. Er befindet sich ausserhalb des Einflussbereichs der Heizung 5.

Der in Fig. 2 obere Teil des Sensors 1 mit Heizung 5 und mit den Temperatursensoren 6, 7 und 11 ist in thermischem Kontakt mit einem Kanal 12, in welchem das Fluid am Sensor vorbei geleitet wird. Der Sensor 1 kann im Kanal 12 oder an der Aussenseite des Kanals 12 angeordnet sein, wobei die Heizung 5 und die Temperatursensoren 6, 7 und 11 in thermischem Kontakt mit dem Fluid sein müssen.

Mit den Temperatursensoren 6 und 7 werden zwei Messgrössen t1 und t2 bestimmt. Die Messgrösse t1 entspricht der Differenz der Temperaturen T1 und T2 zwischen den Temperatursensoren 6 und 7, d.h. dem Temperaturunterschied zwischen den Orten der inneren Kontaktreihen 6a, 7a der Temperatursensoren. Die Messgrösse t2 entspricht der Temperatur T2 am Ort der inneren Kontaktreihe 7a des Temperatursensors 7 nach der Heizung 5, d.h. des stromabwärts liegenden Temperatursensors.

Die Messgrössen t1 und t2 hängen in unterschiedlicher Art vom Massenfluss m und von der thermischen Leitfähigkeit $\lambda$ des Fluids ab, d.h. es gilt

$$t1 = f_1(m, k) \quad \text{und} \tag{1a}$$

und

$$t2 = f_2(m, k), \tag{1b}$$

wobei k der zu ermittelnde Materialparameter

$$k = \lambda, \tag{2}$$

ist und f1 und f2 zwei unterschiedlichen Funktionen sind. Die Messung der Messgrössen t1 und t2 definiert das Gleichungssystem (1a), (1b) und erlaubt die Berechnung der Grössen m und k.

Vorzugsweise wird die Funktion $t1 = f_1(m, k)$ mittels Eichmessungen ermittelt und tabellarisch abgelegt. Für $f_2$ gilt näherungsweise

$$T2 = t2 = f_2(m, k) = g_2(t_1(m, k)) + h_2(\lambda) \tag{3}$$
$$= [(c_1 \cdot (1-\exp(c_2 \cdot t1(m, k)))] + [c_3 + c_4 \cdot \lambda]$$

wobei die Parameter $c_1$ bis $c_4$ aus Kalibrationsmessungen ermittelt werden können.

Als zu ermittelnden Materialparameter k wird in obigen Gleichungen die Wärmeleitfähigkeit $\lambda$ des Gases betrachtet. Es kann jedoch auch jede andere aus der Wärmeleitfähigkeit ableitbare Grösse als zu ermittelnder Materialparameter k verwendet werden. Ist das Fluid beispielsweise ein Gemisch aus zwei Komponenten K1 und K2 mit Wärmeleitfähigkeiten $\lambda 1$ und $\lambda 2$, so kann aus Gleichungssystem (1) auch das Mischungsverhältnis bzw. der Mengenanteil k der ersten Komponente am Gemisch ermittelt werden. Es gilt in diesem Fall, dass die Wärmeleitfähigkeit näherungsweise gegeben ist durch:

$$\lambda = \frac{y_1 \cdot \lambda_1}{y_1 + y_2 \cdot A_{12}} + \frac{y_2 \cdot \lambda 2}{y2 + y1 \cdot A_{21}}$$

mit

$$A_{12} = \frac{\left(1 + \left(\lambda_1 / \lambda_2\right)^{1/2} \cdot \left(y_1 / y_2\right)^{1/4}\right)^2}{\left(8 \cdot \left(1 + \left(\lambda_1 / \lambda_2\right)\right)\right)^{1/2}} \qquad (4)$$

und

$$A_{21} = \frac{\lambda_2}{\lambda_1} \cdot \frac{y_1}{y_2} \cdot A_{12}$$

wobei $y_1$ und $y_2$ die Molmassen den beiden Fluide sind.

Durch Einsetzen von (4) in Gleichungssystem (3) entsteht wiederum ein Gleichungssystem der Art (1a), (1b), aus welchem der Materialparameter k bzw. $y_1/y_2$ bestimmt werden kann.

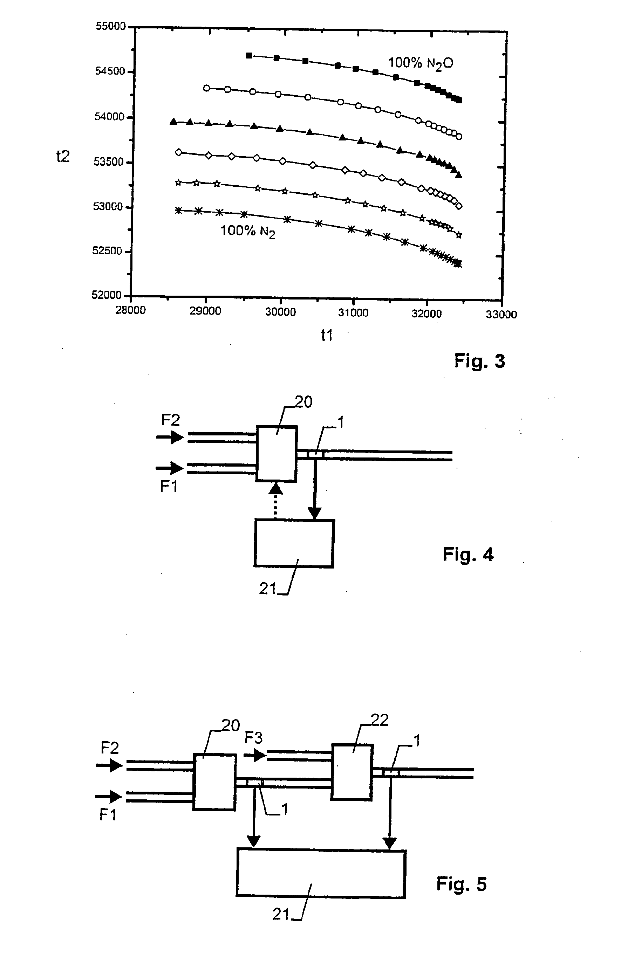

Zur Illustration des Verfahrens an einem konkreten Beispiel wird auf Fig. 3 verwiesen. Diese Figur zeigt die Messgrösse t2 (Temperatur am Temperatursensor nach der Heizung) als Funktion der Messgrösse t1 (Temperaturdifferenz zwischen den Temperatursensoren) auf, und zwar für Messungen mit Gasgemischen aus Stickstoff und Lachgas, wobei die unterste Kurve reinem Stickstoff und die oberste Kurve reinem Lachgas entspricht. Jede Kurve entspricht dabei Messungen an einem Gasgemisch bei mehreren Strömungsgeschwindigkeiten.

Wie aus Fig. 3 ersichtlich, erlaubt die Kenntnis der Werte t1 und t2 eine eindeutige Selektion der zugehörigen Kurve bzw. des zugehörigen Mischungsverhältnisses oder der zugehörigen Wärmeleitfähigkeit, sofern eine ausreichende Zahl von Eichkurven gemäss Fig. 3 zur Verfügung steht. Darüber hinaus kann, z.B. wieder mittels Eichkurven, aus dem Wert t1 und/oder aus dem Wert t2 der Massenfluss ermittelt werden.

Anstelle der Verwendung einer tabellierten Kurvenschar gemäss Fig. 3 ist es auch denkbar, das Gleichungssystem (1) direkt zu lösen. Entsprechende numerische Rechenverfahren sind dem Fachmann bekannt.

Für noch genauere Rechnungen wird vorzugsweise die vom Fluid-Temperatursensor 11 (Fig. 2) gemessene Temperatur berücksichtigt. In der Regel sind die Funktionen $f_1$ und $f_2$ abhängig von der Umgebungstemperatur bzw. von der Fluid-Temperatur, die sich mit dem Fluid-Temperatursensor 11 bestimmen lässt, so dass durch bei Berücksichtigung der von Sensor 11 gemessenen Temperatur die Genauigkeit des ermittelten Flusses m und/oder des ermittelten Materialparameters k verbessert werden kann.

Die Auswerteschaltung zum Lösen des Gleichungssystems (1) bzw. (3) kann teilweise oder vollständig auf dem Silizium-Einkristall 2 integriert sein. Insbesondere kann Gleichung (1a) direkt auf dem Silizium-Einkristall gelöst werden.

Das hier beschriebene Verfahren lässt sich in verschiedener Weise verallgemeinern.

Beispielsweise können, anstelle von t1 = T1 - T2 und t2 = T2, die Messgrössen t1 und t2 in anderer Weise von den Temperaturen T1 und T2 abhängen.

So kann die Messgrösse t2 auch der Temperatur T1 am stromaufwärts gelegenen Temperatursensor 6 entsprechen, wobei jedoch eine Messung am stromabwärts gelegenen Temperatursensor 7 für die meisten Flussgeschwindigkeiten genauere Resultate ergibt.

Auch die Messgrösse t1 kann der Temperatur am stromaufwärts Temperatursensor 6 entsprechen, anstelle der Temperaturdifferenz zwischen den Temperatursensoren. Die Funktion $f_1$ ist in diesem Falle entsprechend anzupassen.

Es können sich auch mehr als zwei Temperatursensoren im Einflussbereich der Heizung 5 befinden, deren Signale einzeln oder kombiniert in weitere Messgrössen t3, t4 usw. umgewandelt werden können. Dadurch wird das Gleichungssystem (1) entsprechend grösser, was es erlaubt weitere unbekannte Grössen zu bestimmen oder den Massenfluss und den Materialparameter k mittels Ausgleichsrechnung genauer zu ermitteln.

Denkbar ist es auch, einen Temperatursensor direkt in die Heizung 5 zu integrieren, indem deren elektrische Widerstand gemessen wird. Denkbar ist es auch die Heizleistung in einer Rückkopplungschleife so zu steuern, dass eine der Messgrössen einen bestimmten Wert erreicht, und sodann anstelle der geregelten Messgrösse die Heizleistung als Messgrösse zu verwenden.

Eine bevorzugte Anwendung der Erfindung ist in Fig. 4 dargestellt, die ein Gerät zur Mischung zweier Fluide F1, F2 zeigt. Das Gerät besitzt einen Mischer 20 zum Mischen der zwei Fluide. Die Fluide besitzen unterschiedliche Wärmeleitfähigkeit. Nach dem Mischer 20 ist ein Sensor 1 angeordnet, der das Mischverhältnis zwischen den Fluiden gemäss obiger Beschreibung misst und das Resultat einer Steuerung 21 zuführt. Das so ermittelte Mischverhältnis kann für eine Überwachung verwendet werden, indem eine Warnung ausgegeben wird, wenn das Mischverhältnis einen vorgegebenen Bereich über- oder unterschreitet. Es ist auch möglich, das Mischverhältnis zu regeln, indem die Steuerung 21 das gemessene Mischverhältnis verwendet um den Mischer 20 zu steuern. Ferner kann nicht nur das Mischungsverhältnis geregelt werden, sondern auch der Massenfluss des Gemisches. In diesem Fall sind die Stellgrössen das Mischungsverhältnis und der Massenfluss und die Regelgrössen die beiden Massenflüsse vor dem Mischer.

Mit dem Sensor 1 können auch Mischverhältnisse (und Massenflüsse) von mehr als zwei Fluiden bestimmt werden, sofern diese ausreichend unterschiedliche Wärmeleitfähigkeiten besitzen. Hierzu dient das in Fig. 5 dargestellte Gerät. Hier werden ein erstes und ein zweites Fluid in einem ersten Mischer 20 zusammengeführt. Das so erzeugte erste Gemisch wird einem zweiten Mischer 22 zugeführt, wo es mit einem dritten Fluid vermischt wird. Ein erster Sensor 1 ist, in Flussrichtung gesehen, zwischen dem ersten und dem zweiten Mischer 20 bzw. 22 angeordnet und misst das Mischungsverhältnis zwischen dem ersten und dem zweiten Fluid. Ein zweiter Sensor 1 ist nach dem zweiten Mischer 22 angeordnet und misst das Mischverhältnis zwischen dem ersten Gemisch und dem dritten Fluid, woraus die Mischungsverhältnisse aller Fluide bestimmt werden können.

In einer bevorzugten Verwendung wird mit der erfindungsgemässen Vorrichtung die Zusammensetzung einer Mischung überwacht, welche einem Brenner oder einer Brennstoffzelle zugeführt werden soll. Die Grösse k wird dabei für eine Steuerung des Brenners bzw. der Brennstoffzelle eingesetzt. Sie kann auch zur Berechnung des Brennwerts z.B. für eine Gebührenerfassung dienen.

Die Vorrichtung kann auch zur Überwachung eines Brenners oder einer Brennstoffzelle verwendet werden. Im Zusammenhang mit Brennstoffzellen für Wasserstoff und Sauerstoff kann die Vorrichtung beispielsweise eingesetzt werden, um die Fluidzufuhr zu unterbrechen, wenn das Gasgemisch eine kritische Grösse erreicht, bei der Explosionsgefahr besteht.

Geräte der beschriebenen Art können auch in Anästesie- oder Beatmungsgeräten eingesetzt werden, in denen das Verhältnis zwischen unterschiedlichen Gasen, z.B. Sauerstoff und Lachgas, bestimmt oder geregelt werden muss.

Der beschriebene Sensor kann auch zur Messung des Materialparameters k bei ruhendem Fluid eingesetzt werden.

**Patentansprüche**

1. Vorrichtung zur Messung des Flusses m und mindestens eines Materialparameters k eines Fluids, wobei der Materialparameter abhängig ist von einer Wärmeleitfähigkeit des Fluids, wobei die Vorrichtung aufweist

   eine Heizung (5) zum Erzeugen eines Bereichs nicht-homogener Temperatur im Fluid,
   mehrere Sensoren (6, 7) zur Ermittlung von mindestens zwei Messgrössen t1, t2, die von Fluid-Temperaturen in einem Einflussbereich der Heizung (5) abhängen, und
   eine Auswerteschaltung (10) zum Ermitteln des Flusses m aus mindestens einer der Messgrössen t1, t2,
   wobei das Fluid ein Gemisch aus mindestens zwei Stoffen ist und der Materialparameter k das Mischungsverhältnis zwischen den zwei Stoffen angibt, wobei die Messgrössen unterschiedliche Funktionen $f_1(m, k)$ und $f_2(m, k)$ abhängig von Fluss m und vom Materialparameter k sind und die Auswerteschaltung (10) ausgestaltet ist um aus den Messgrössen t1 und t2 zusätzlich zum Fluss m den Materialparameter k zu ermitteln, wobei die Sensoren (6, 7) einen ersten Temperatursensor (6) vor der Heizung (5) und einen zweiten Temperatursensor (7) nach der Heizung (5) umfassen, wobei die Temperatursensoren neben der Heizung (5) angeordnet sind, derart, dass das zu messende Medium zuerst den ersten Temperatursensor 6, dann die Heizung 5 und schliesslich den zweiten Temperatursensor 7 überstreicht,
   **dadurch gekennzeichnet, dass** die Messgrössen t1 und t2 aus Signalen der beiden Temperatursensoren abgeleitet sind, wobei die Messgrösse t2 der Fluid-Temperatur beim zweiten Temperatursensor (7) entspricht und wobei die Messgrösse t1 einer Differenz zwischen den Fluid-Temperaturen bei den Temperatursensoren (6, 7) entsprechen.

2. Vorrichtung nach Anspruch 1 mit einem Fluid-Temperatursensor (11), der ausserhalb des Einflussbereichs der Heizung (5) angeordnet ist, wobei die Auswerteschaltung (10) ausgestaltet ist, um ein Signal des Fluid-Temperatursensors (11) beim Ermitteln des Materialparameters k und/oder des Flusses m zu verwenden.

3. Vorrichtung nach einem der vorangehenden Ansprüche, wobei die Heizung (5) und die Sensoren (6, 7) gemeinsam auf einem Halbleiterchip (2) integriert sind.

4. Vorrichtung nach einem der vorangehenden Ansprüche, wobei die Vorrichtung genau eine Heizung (5) aufweist.

**5.** Gerät zur Mischung mindestens zweier Fluide mit unterschiedlicher Wärmeleitfähigkeit mit einer Vorrichtung (1) nach einem der vorangehenden Ansprüche, wobei der Materialparameter k das Mischungsverhältnis der Fluide ist.

**6.** Gerät nach Anspruch 5, wobei es ausgestaltet ist um das Mischungsverhältnis aufgrund des Materialparameters k zu überwachen oder zu regeln.

**7.** Gerät nach einem der Ansprüche 5 oder 6, ausgestaltet zur Mischung mindestens dreier Fluide, wobei es einen ersten Mischer (20) aufweist zur Mischung eines ersten und ein zweiten der Fluide zu einem ersten Gemisch, sowie einen zweiten Mischer (22) zum Mischen des ersten Gemischs und eines drittes der Fluide zu einem zweiten Gemisch, wobei, in Flussrichtung der Fluide gesehen, eine erste Vorrichtung zwischen dem ersten und dem zweiten Mischer angeordnet ist und eine zweite Vorrichtung nach dem zweiten Mischer.

**8.** Verwendung der Vorrichtung nach einem der vorangehenden Ansprüche zur Messung des Flusses m und einer eine Zusammensetzung des Fluids charakterisierende Grösse k.

**9.** Verwendung nach Anspruch 8, wobei das Fluid eine Mischung aus einem ersten und einem zweiten Material ist und die Grösse k ein Mischungsverhältnis zwischen den Materialien angibt, und insbesondere wobei die Grösse k für eine Überwachung oder Regelung des Mischungsverhältnisses eingesetzt wird.

**10.** Verwendung nach einem der Ansprüche 8 oder 9, wobei die Mischung einem Brenner oder einer Brennstoffzelle zugeführt wird und die Grösse k für eine Steuerung und/oder Überwachung des Brenners bzw. der Brennstoffzelle eingesetzt wird.

**Claims**

**1.** Device for measuring the flow m and at least a material parameter k of a fluid, wherein the material parameter depends on a thermal conductivity of the fluid, wherein the device has
a heater (5) for generating an area of inhomogeneous temperature in the fluid,
a plurality of sensors (6, 7) for determining at least two measurement values t1, t2 which depend on fluid temperatures in an influence area of the heating (5), and
an evaluation circuit (10) for determining the flow m on the basis of at least one of the measurement values t1, t2, wherein the fluid is a mixture of at least two substances and the material parameter k specifies the mixture ratio of the two substances, wherein the measurement values are different functions $f_1(m, k)$ and $f_2(m, k)$ depending on the flow m and the material parameter k and the evaluation circuit (10) is adapted to determine the material parameter k, additionally to the flow m, on the basis of the measurement values t1 and t2, wherein the sensors (6, 7) comprise a first temperature sensor (6) before the heater (5) and a second temperature sensor (7) after the heater (5), wherein the temperature sensors are arranged adjacent to the heater (5), in such a way that the medium to be measured first passes by the first temperature sensor (6), subsequently by the heater (5) and finally by the second temperature sensor (7),
**characterized in that** the measurement values t1 and t2 are derived from signals of the two temperature sensors, wherein the measurement value t2 corresponds to the fluid temperature at the location of the second temperature sensor (7) and wherein the measurement value t1 corresponds to a difference between the fluid temperatures at the location of the temperature sensors (6, 7).

**2.** Device according to claim 1, with a fluid temperature sensor (11) arranged outside the influence area of the heater (5), wherein the evaluation circuit (10) is adapted to use a signal of the fluid temperature sensor (11) when determining the material parameter k and/or the flow m.

**3.** Device according to one of the preceding claims, wherein the heater (5) and the sensors (6, 7) are integrated together on a semiconductor circuit (2).

**4.** Device according to one of the preceding claims, wherein the device has precisely one heater (5).

**5.** Apparatus for mixing two fluids with different thermal conductivities by means of the device (1) according to one of the preceding claims, wherein the material parameter k is the mixing ratio of the fluids.

**6.** Apparatus according to claim 5, wherein it is adapted to monitor or to regulate the mixing ratio on the basis of the material parameter k.

**7.** Apparatus according to one of the claims 5 or 6, adapted to mix at least three fluids, wherein it has a first mixer (20) for mixing a first and a second of the fluids yielding a first mixture, as well as a second mixer (22) for mixing the first mixture and a third fluid yielding a second mixture, wherein, as seen in the flow direction of the fluids, a first device is arranged between the first and the second mixer and a second device is arranged after the second mixer.

**8.** Use of the device according to one of the preceding claims for measuring the flow m and a value k characterizing the fluid composition.

**9.** Use according to claim 8, wherein the fluid is a mixture of a first and a second material and the value k indicates a mixing ratio between the materials, and particularly wherein the value k is used for monitoring or regulating the mixing ratio.

**10.** Use according to one of the claims 8 or 9, wherein the mixture is supplied to a burner or a fuel cell and the value k is used for controlling and/or monitoring the burner or the fuel cell respectively.

**Revendications**

**1.** Dispositif pour mesurer le flux m et au moins un paramètre de matériau k d'un fluide, le paramètre de matériau dépendant d'une conductivité thermique du fluide, le dispositif ayant
un chauffage (5) pour générer une zone de température inhomogène dans le fluide,
une pluralité de capteurs (6, 7) pour déterminer au moins deux valeurs de mesure t1, t2 qui dépendent de températures du fluide dans une zone d'influence du chauffage (5), et
un circuit d'évaluation (10) pour déterminer le flux m basé sur au moins une des valeurs de mesure t1, t2,
le fluide étant un mélange d'au moins deux substances et le paramètre de matériau k spécifiant le rapport de mélange entre les deux substances, les values de mesure étant des fonctions différentes $f_1(m, k)$ et $f_2(m, k)$ dépendantes du flux m et du paramètre de matériau k et le circuit d'évaluation (10) étant adapté à déterminer le paramètre de matériau k, outre du flux m, basé sur les valeurs de mesure t1 et t2, les capteurs (6, 7) comprenant un premier capteur de température (6) en amont du chauffage (5) et un deuxième capteur de température (7) en aval du chauffage (5), les capteurs de température étant arrangés à côté du chauffage (5) de sorte que le medium à mesurer passe premièrement par le premier capteur de température (6), ultérieurement par le chauffage (5) et finalement par le deuxième capteur de température (7),
**caractérisé en ce que** les valeurs de mesure t1 et t2 sont dérivées des signaux des deux capteurs de température, la valeur de mesure t2 correspondant à la température du fluide au lieu du deuxième capteur de température (7) et la valeur de mesure t1 correspondant à une différence entre les températures du fluide au lieu des capteurs de température (6, 7).

**2.** Dispositif selon la revendication 1, avec un capteur de température du fluide (11) arrangé à l'extérieur de la zone d'influence du chauffage (5), le circuit d'évaluation (10) étant adapté à utiliser un signal du capteur de température du fluide (11) pendant la détermination du paramètre de matériau k et/ou du flux m.

**3.** Dispositif selon l'une des revendications précédentes, le chauffage (5) et les capteurs (6, 7) étant intégrés ensemble sur un circuit semi-conducteur (2).

**4.** Dispositif selon l'une des revendications précédentes, le dispositif ayant exactement un chauffage (5).

**5.** Appareil pour mélanger deux fluides avec des différentes conductivités thermiques à l'aide du dispositif (1) selon l'une des revendications précédentes, le paramètre de matériau k étant le rapport de mélange des fluides.

**6.** Appareil selon la revendication 5, étant adapté à surveiller ou à réguler le rapport de mélange basé sur le paramètre de matériau k.

**7.** Appareil selon l'une des revendications 5 ou 6, adapté à mélanger au moins trois fluides, ayant un premier mélangeur (20) pour mélanger un premier et un deuxième des fluides résultant en un premier mélange, ainsi qu'un deuxième mélangeur (22) pour mélanger le premier mélange et un troisième des fluides résultant en un deuxième mélange, un premier dispositif étant arrangé entre le premier et le deuxième mélangeur et un deuxième dispositif étant arrangé en aval du deuxième mélangeur, vu dans la direction du flux des fluides.

8. Usage du dispositif selon l'une des revendications précédentes pour la mesure du flux m et d'une valeur k caractérisant la composition du fluide.

9. Usage selon la revendication 8, le fluide étant un mélange d'un premier et d'un deuxième matériau et la valeur k indiquant un rapport de mélange entre les matériaux, et particulièrement la valeur k étant utilisée pour surveiller ou réguler le rapport de mélange.

10. Usage selon l'une des revendications 8 ou 9, le mélange étant alimenté à un brûleur ou à une pile à combustible et la valeur k étant utilisée pour contrôler et/ou surveiller le brûleur ou bien la pile à combustible.

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0118500 A
- EP 484645 A
- US 5515714 A
- WO 0198736 A